# EUROPEAN PATENT APPLICATION

(11) **EP 4 773 548 A1**
(43) Date of publication of application: **08.07.2026**
(21) Application number: 25176801.6
(22) Date of filing: 15.05.2025
(51) Int. Cl.: H04L 9/40

(54) **INTRUSION PREVENTION SYSTEM IN COMMUNICATION NETWORKS AND METHOD AND DEVICE THEREOF**

(30) Priority: 03.01.2025 IN 202511000636; 15.04.2025 GB 202505636
(71) Applicant: Cambium Networks Ltd, Ashburton, Devon TQ13 7UP (GB)
(72) Inventor: ATREYA, Vivek Lakshminarayana, 560003 Bangalore (IN); ANKAIAH, Shashi Hosakere, 560076 Bangalore (IN); MIRANDA, Trevor, 94133 San Francisco (US)
(74) Representative: EIP

(57) **Abstract**

A method (500), device (200), and system for preventing intrusion in communication networks is disclosed. The method (500) may include retrieving, for each of a set of open ports within a communication network (202), at least one host attribute of an associated host and a port number. A destination host attribute in an Intrusion Prevention System (IPS) rule is matched with at least one host attribute with each of the set of open ports in the communication network (202). The IPS rule is adapted based on a result of the matching. The IPS rule is selectively applied in the communication network (202) based on the adapting.

## Description

### Technical Field

The present disclosure relates generally to security in communication networks, and more specifically, but not exclusively, to intrusion prevention system in communication networks and method and device thereof.

### BACKGROUND

Intrusion Prevention Systems (IPS) are network security tools that monitor and analyse network traffic to detect and prevent malicious activity in communication networks. These systems work by comparing incoming and outgoing network packets in a communication network against predefined IPS rules that identify suspicious behaviour. IPS systems are deployed at network boundaries to protect organizations from a range of cyber threats. IPS systems can either block potential attacks or alert administrators regarding these attacks based on the predefined IPS rules. The predefined IPS rules are typically provided in the form of rule sets. Each rule set may be vast as it may include rules for different services and vulnerabilities and are further updated periodically to adapt to emerging threats. The effectiveness of the IPS systems depend on the accuracy and relevance of the rule sets applied to a communication network.

A major challenge with conventional IPS systems is their inefficiency in handling large rule sets. Applying the full spectrum of available rules consumes considerable system memory, which increases latency and slows down network performance. This increase in latency and slowdown of network performance forces administrators of the communication network to manually prune irrelevant rules from the rule set, based on their knowledge of the communication network. However, this manual process is time-consuming and prone to error. Moreover, many administrators lack the expertise to correctly adapt the rule sets in accordance with attributes of their communication network. As a result, most IPS deployments either suffer from rule bloat which leads to decreased system performance, or risk under-protection by using incomplete or non-customized rule sets.

In some conventional IPS systems, in order to optimize rule sets, the rule sets may be categorized which allows users to choose between different levels of security. While these conventional IPS systems provide some level of customization, they may still require manual effort to refine the rule sets to fit the specific services and vulnerabilities present in the communication network. Moreover, the conventional IPS systems may not adapt in accordance with the communication network, meaning that the rule sets often contain irrelevant IPS rules that waste computational resources and lack coverage for newly detected services and vulnerabilities.

It is an object of the disclosure to mitigate the problems of the prior art.

### BRIEF SUMMARY OF THE INVENTION

In accordance with a first aspect of the disclosure there is provided a method for preventing intrusion in communication networks. The method may include retrieving, for each of a set of open ports within a communication network, at least one host attribute of an associated host and a port number. The method may further include matching a destination host attribute in an Intrusion Prevention System (IPS) rule with at least one host attribute associated with each of the set of open ports in the communication network. The method may further include adapting the IPS rule based on a result of the matching. The method may further include selectively applying the IPS rule in the communication network based on the adapting.

In accordance with a second aspect of the disclosure there is provided a method for preventing intrusion in communication networks. The method may include determining, for each of a set of open ports within a communication network, a Common Platform Enumeration (CPE) for a service running on the corresponding open port and a set of Common Vulnerabilities and Exposures (CVEs) associated with the CPE. The method may further include mapping CVEs associated with an Intrusion Prevention System (IPS) rule with the set of CVEs determined for each of the set of the open ports. The method may further include adapting the IPS rule based on a result of the mapping. The method may further include selectively applying the IPS rule in the communication network based on the adapting.

In accordance with a third aspect of the disclosure there is provided a network device. The network device may include a processor, and a memory communicably coupled to the processor and comprising processor instructions that when executed by the processor, cause the processor to retrieve, for each of a set of open ports within a communication network, at least one host attribute of an associated host and a port number. The processor may further match a destination host attribute associated with each of the set of open ports in the communication network. The processor may further adapt the IPS rule based on a result of the matching. The processor may further selectively apply the IPS rule in the communication network based on the adapting.

Further features of the disclosure will be apparent from the following description of preferred embodiments of the disclosure, which are given by way of example only.

### BRIEF DESCRIPTION OF THE DRAWINGS

The present application can be best understood by reference to the following description taken in conjunction with the accompanying drawing figures, in which like parts may be referred to by like numerals.
**FIG. 1** depicts a communication network where a system for preventing intrusion may be deployed;
**FIG. 2** depicts a network device configured to prevent intrusion in a communication network, in accordance with an embodiment of the disclosure;
**FIG. 3** depicts a table illustrating a process of matching destination host attribute in an Intrusion Prevention System (IPS) rule with at least one host attribute associated with each open port within a communication network, in accordance with an embodiment of the disclosure;
**FIG. 4** depicts a table illustrating a process of mapping Common Vulnerabilities and Exposures (CVEs) associated with an IPS rule with a set of CVEs determined for each open port within a communication network, in accordance with an embodiment of the disclosure;
**FIG. 5** illustrates a flowchart of an exemplary method for preventing intrusion in a communication network, in accordance with an embodiment of the disclosure;
**FIG. 6** illustrates a flowchart of an exemplary method for adapting the IPS rule, in accordance with an embodiment of the disclosure;
**FIG. 7** illustrates a flowchart of another exemplary method for preventing intrusion in a communication network, in accordance with an embodiment of the disclosure.
**FIG. 8** illustrates a flowchart of another exemplary method for adapting the IPS rule, in accordance with an embodiment of the disclosure.

### DETAILED DESCRIPTION OF THE DRAWINGS

The following description is presented to enable a person of ordinary skill in the art to make and use the disclosure and is provided in the context of particular applications and their requirements. Various modifications to the embodiments will be readily apparent to those skilled in the art, and the generic principles defined herein may be applied to other embodiments and applications without departing from the spirit and scope of the disclosure. Moreover, in the following description, numerous details are set forth for the purpose of explanation. However, one of ordinary skill in the art will realize that the disclosure might be practiced without the use of these specific details. In other instances, well-known structures and devices are shown in block diagram form in order not to obscure the description of the disclosure with unnecessary detail. Thus, the disclosure is not intended to be limited to the embodiments shown but is to be accorded the widest scope consistent with the principles and features disclosed herein.

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

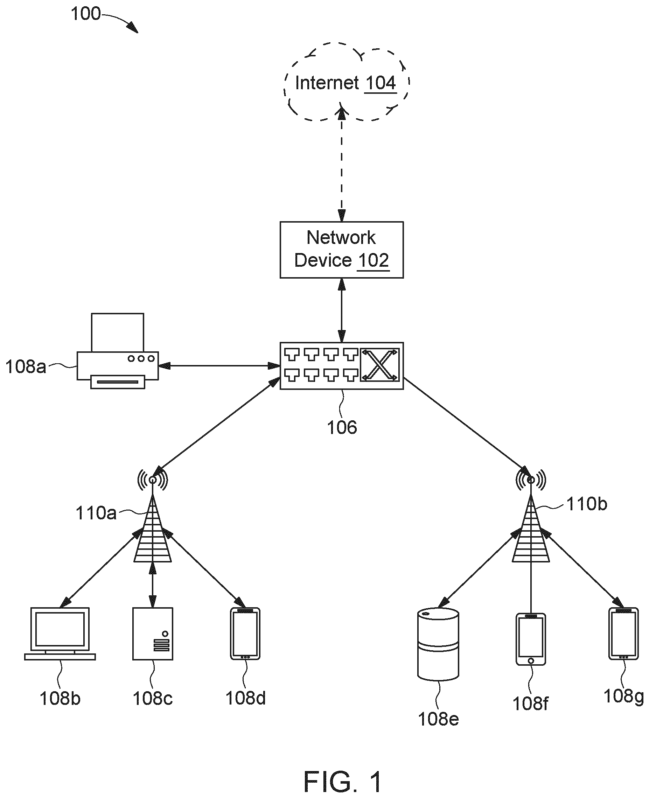

**FIG. 1** depicts a communication network 100 where a system for preventing intrusion may be deployed. The communication network 100 may be configured as a Local Area Network (LAN) and may include a network device 102. The network device 102 may represent any network infrastructure responsible for network safety and traffic management within the LAN. The network device 102 for example, may be a firewall device, a router, a switch, a dedicated IPS, a gateway or any similar network infrastructure. In this embodiment, the network device 102 may execute Intrusion Prevention System (IPS) rules to monitor, adapt, and selectively apply security measures within the communication network 100. The network device 102 is communicatively coupled to a network switch 106 that acts as an intermediary or bridge between a plurality of end-devices 108 and the network device 102.

The plurality of end-devices 108 may include, but are not limited to a printer 108a, a laptop 108b, a server 108c, a smartphone 108d, an Internet of Things (IOT) device 108e, a mobile phone 108f, or a tablet 108g. The network switch 106 may include a plurality of switch ports (not shown in FIG. 1) and may be communicatively coupled to each of the plurality of end-devices 108 through one or more of the plurality of switch ports either directly through a wired connection or via a wireless Access Points (APs) 110 (for example, a wireless AP 110a and a wireless AP 110b). The wireless APs 110 monitor and manage the plurality of end devices 108 and act as a gateway for incoming traffic. The wireless APs 110 may also provide gateway for traffic flow and ensure that IPS rules may be applied to both wired and wireless hosts. Additionally, the communication network 100 may also include, but is not limited to, virtual entities (not shown in FIG. 1) such as virtual machines (VMs), containers, and virtual servers in cloud, as well as applications (not shown in FIG. 1) such as web applications, cloud-based applications, and microservices.

On the other side, the network device 102 may also be communicatively coupled to the internet 104. Thus, while the network switch 106 along with the plurality of end-devices 108 and the wireless APs 110 may form the LAN that is connected to the network device 102, the internet 104 may form a Wide Area Network (WAN). In other words, while the network switch 106 controls access of the plurality of end-devices 108 to the network device 102, the network device 102 further controls communication between the plurality of end-devices 108 and external networks such as the internet 104, using the IPS rules.

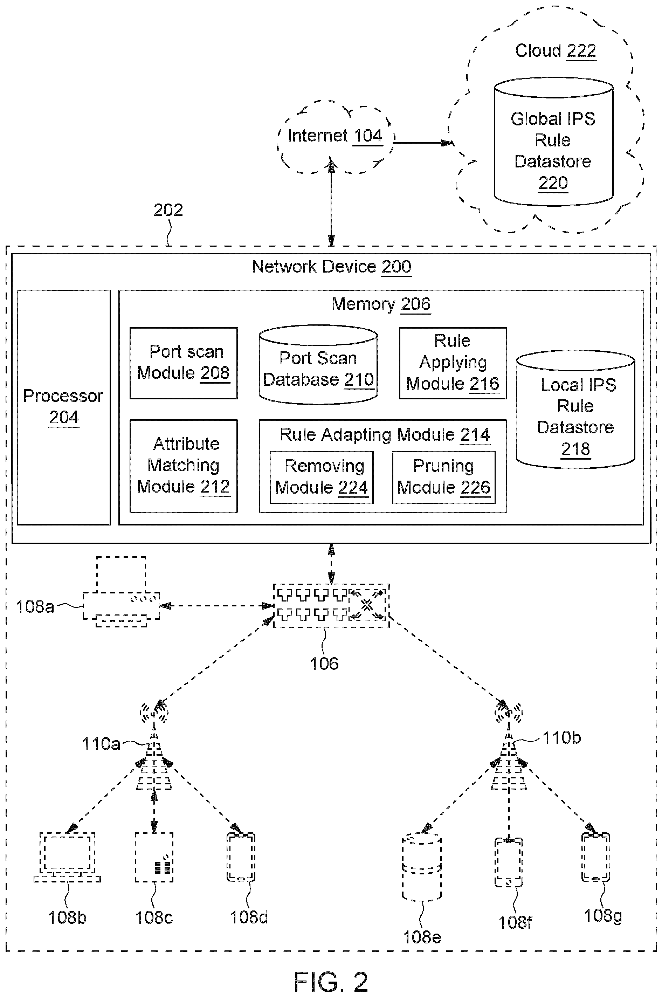

**FIG. 2** depicts a network device 200 configured to prevent intrusion in a communication network 202, in accordance with an embodiment of the disclosure. The network device 200, for example may be a firewall device, a router, a switch, a dedicated Intrusion Prevention System (IPS) or a gateway that is communicably coupled to the network switch 106.

Each of the plurality of end-devices 108, the virtual entities, and the applications within the communication network 202 may be referred as a host. The host may be, for example a Structured Query Language (SQL) server, a Simple Mail Transfer Protocol (SMTP) server, a Domain Name System (DNS) server, a Hyper Text Transfer Protocol (HTTP) server, a Teletype Network (Telnet) server, or any other end device, virtual entity, or an application. Each host possesses one or more open ports through which the host communicate within the communication network 202 and with external services. These open ports serve as potential entry points for data exchange but are also potential vectors for network intrusion. The open port may be, for example, an open port 1433 (SQL) for the SQL server, an open port 25 (SMTP) for the SMTP server, an open port 53 (DNS) for the DNS server, an open port 80 (HTTP) for the HTTP server, an open port 23 (Telnet) for the Telnet server.

Each open port runs a specific service and for each service there is a corresponding Common Platform Enumeration (CPE), which provides a standardized method for identifying software, operating systems, or hardware executing or running on the host. Example of such services and corresponding ports may include a database management and query execution service running on the open port 1433 (SQL), a sending and receiving email communication service running on the open port 25 (SMTP), a domain name resolution service running on the open port 53 (DNS), a web traffic handling and web content delivering service running on the open port 80 (HTTP), and a remote command line service running on the open port 23 (Telnet). Further, examples of CPEs for specific services may include "cpe:/a:microsoft:sql_server:2019" for the database management and query execution service, "cpe:/a:postfix:postfix:3.4.14" for the sending and receiving email communication service, "cpe:/a:isc:bind:9.11.36" for the domain name resolution service, "cpe:/a:apache:http_server:2.4.51" for the web traffic handling and web content delivering service, and "cpe:/a:sun:solaris_teInetd:11" for the remote command line service. It may be apparent that aforementioned CPEs are being used merely for explanation purposes.

Furthermore, each CPE has one or more Common Vulnerabilities and Exposures (CVEs) associated with it. These CVEs identify known vulnerabilities for a given service. For example, the CPE "cpe:/a:microsoft:sql_server:2019" may have an associated CVE, "CVE-2020-0618" that addresses a remote code execution vulnerability in the SQL server. Similarly, the CPE "cpe:/a:postfix:postfix:3.4.14" may have an associated CVE, "CVE-2020-10188" that addresses a vulnerability in Postfix where an issue in handling of certain configurations may allow attackers to execute arbitrary commands. Further, the CPE "cpe:/a:isc:bind:9.11.36" may have an associated CVE, "CVE-2020-8622" that addresses a denial of service vulnerability in the DNS server. Similarly, the CPE "cpe:/a:apache:http_server:2.4.51" may have an associated CVE, "CVE-2021-41773" that addresses a path traversal vulnerability in the HTTP Server. The CPE "cpe:/a:sun:solaris_teInetd:11" may have an associated CVE, "CVE-2019-7283" that relates to a remote code execution vulnerability in the Telnet server. These CVEs represent potential security weaknesses that attackers may exploit. Thus, these CVEs are considered when applying IPS rules to detect and prevent malicious activity within the communication network 202.

The network device 200 acts as a primary security component in the communication network 202, where the network device 200 applies intrusion prevention techniques by scanning for vulnerabilities and adapting the IPS rules. To this end, the network device 200 may include a processor 204 and a memory 206. Examples of the processor 204 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™} system on a chip processors or other future processors. The memory 206 may be a non-volatile memory or a volatile memory. Examples of the non-volatile memory may include but are not limited to, a flash memory, a Read Only Memory (ROM), a Programmable ROM (PROM), Erasable PROM (EPROM), and Electrically EPROM (EEPROM) memory. Examples of the volatile memory may include but are not limited to, Dynamic Random Access Memory (DRAM), and Static Random-Access memory (SRAM).

In an embodiment, the memory 206 may store instructions that, when executed by the processor 204, may cause the processor 204 to prevent intrusion in the communication network 202, as discussed in more detail below. The memory 206 may further include a port scan module 208, a port scan database 210, an attribute matching module 212, a rule adapting module 214, and a rule applying module 216.

The network device 200 may further include a local IPS rule datastore 218. The local IPS rule datastore 218 may store a repository of Intrusion Prevention System (IPS) rules. In addition to the local IPS rule datastore 218, the network device 200 may also communicate, via the internet 104, with a global IPS rule datastore 220 that is stored on a cloud 222. The global IPS rule datastore 220 may include near exhaustive list of IPS rules that have currently been updated based on newly identified security threats. The local IPS rule datastore 218 may be regularly updated by periodically synching with the global IPS rule datastore 220.

The port scan module 208 may perform a port scan within the communication network 202 to retrieve at least one host attribute of an associated host and a port number for each of the set of open ports within the communication network 202. In an embodiment, the at least one host attribute may include, but is not limited to a type of the associated host, a brand of the associated host, an Operating System (OS) of the associated host, and an OS version of the associated host. Additionally, the port scan module 208 while performing the port scan may also determine, for each of the set of open ports, a CPE for a service running on the corresponding open port and a set of CVEs associated with the CPE.

In some embodiments, the port scan module 208 may periodically perform, for each of a set of open ports within the communication network 202, the port scan to retrieve at least one host attribute of an associated host, a port number, a CPE for a service running on a corresponding open port, and a set of CVEs associated with the CPE. Based on a result of the port scan for each of the set of open ports within the communication network 202, the port scan module 208 may then store, for each of the set of open ports, the at least one host attribute, and the port number, the CPE for the service running on the corresponding open port, and the set of CVEs associated with the CPE in the port scan database 210.

In order to adapt the IPS rules in the repository, the attribute matching module 212 may extract destination host attribute from an IPS rule. The IPS rule, for example, may be, "alert udp $EXTERNAL_NET any -> $SQL_SERVER 1433 (msg:"SQL Server potential unauthorized access"; flow:to_server; content:"SELECT"; metadata:ruleset community; reference:cve, 2020-1234; classtype:attempted-user; sid:500001; rev:1;)". In this example, SQL_SERVER' refers to a destination host and EXTERNAL_NET refers to WAN. The direction of network traffic in the above example is from WAN to the SQL_SERVER. In other words, this IPS rule is relevant for all SQL Servers in a given communication network. In some embodiments, the attribute matching module 212 may also extract at least one host attribute associated with each of the set of open ports from the port scan database 210.

The attribute matching module 212 may further match the destination host attribute in the IPS rule with the at least one host attribute associated with each of the set of open ports in the communication network 202. The attribute matching module 212 may determine if a match is found between the destination host attribute in the IPS rule and the at least one host attribute associated with an open port from the set of open ports. The attribute matching module 212 may send a result of the matching to the rule adapting module 214. One result of the matching may be that the destination host attribute in the IPS rule matches with the at least one host attribute associated with the at least one open port from the set of open ports in the communication network 202. Alternatively, the result may be that the destination host attributes in the IPS rule do not match with the at least one host attribute associated with each of the set of open ports in the communication network 202.

Accordingly, based on the result, the rule adapting module 214 adapts the IPS rule. In an embodiment, when the destination host attributes in the IPS rule do not match with the at least one host attribute associated with each of the set of open ports in the communication network 202, a rule removing module 224 may remove the IPS rule from the repository of IPS rules in order to adapt the IPS rule. Alternatively, when the destination host attributes match with the at least one host attribute associated with at least one port from the set of open ports in the communication network 202, a pruning module 226 may prune the IPS rule in order to adapt the IPS rule. In order to prune the IPS rule, the destination host attributes in the IPS rule may be replaced with Internet Protocol (IP) address of each of the at least one open port. Upon adapting the IPS rule, the rule applying module 216, may then, selectively apply the IPS rule in the communication network 202 based on the adapting. In other words, if the IPS rule is removed, it is obviously not applied in the communication network. However, if the IPS rule is pruned to include some specific IP addresses, then the IPS rule is only applied to these IP addresses. It will be apparent that though reference is made to a single IPS rule, the process of adapting is performed for each IPS rule in the repository of IPS rules.

Additionally, in some embodiments, the attribute matching module 212 may extract the set of CVEs determined for each of the set of open ports from the port scan database 210. The attribute matching module 212 may also extract CVEs associated with the IPS rule. In some embodiments, the CVEs associated with the IPS rule may be extracted based on a Snort Identifier (SID) in the IPS rule. The attribute matching module 212 may further map CVEs associated with the IPS rule with the set of CVEs determined for each of the set of open ports.

The attribute matching module 212 may send a result of the mapping to the rule adapting module 214. The result may be that the CVEs associated with the IPS rule do not match with each of the set of CVEs determined for each of the set of open ports in the communication network. Alternatively, the result may be that the CVEs associated with the IPS rule match with at least one of the set of CVEs determined for at least one port the set of open ports.

Accordingly, based on the result, the rule adapting module 214 adapts the IPS rule. In an embodiment, when the CVEs associated with the IPS rule do not match with each of the set of CVEs determined for each of the set of open ports in the communication network 202, the rule removing module 224 may remove the IPS rule from the repository of IPS rules. Alternatively, when the CVEs associated with the IPS rule match at least one of the set of CVEs determined for at least one port from the set of open ports in the communication network 202, the pruning module 226 may prune the IPS rule in order to adapt the IPS rule. In order to prune the IPS rule, the destination host attribute in the IPS rule may be replaced with Internet Protocol (IP) address of each of the at least one open port. Upon adapting the IPS rule, the rule applying module 216, may then, selectively apply the IPS rule in the communication network 202 based on the adapting. In other words, if the IPS rule is removed, it is obviously not applied in the communication network 202. However, if the IPS rule is pruned to include some specific IP addresses, then the IPS rule is only applied to these IP addresses. It will be apparent that though reference is made to a single IPS rule, the process of adapting is performed for each IPS rule in the repository of IPS rules.

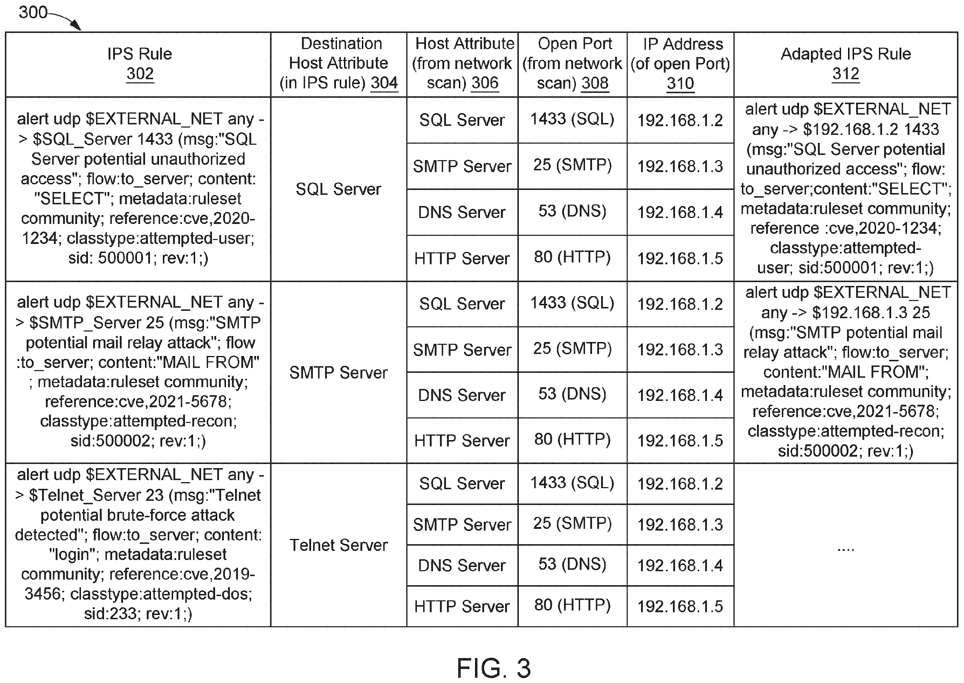

FIG. 3 depicts a table 300 illustrating a process of matching destination host attribute in an IPS rule with at least one host attribute associated with each open port within the communication network 202, in accordance with an exemplary embodiment of the disclosure. **FIG. 3** is explained in conjunction with **FIG. 2****.**

The table 300 may include six columns, each representing different stages in the process of IPS rule adaptation. The columns are labelled as an IPS rule column 302, a destination host attribute column 304, a host attribute column 306, an open port column 308, an IP address column 310, and an adapted IPS rule column 312. Each row in the table 300 corresponds to a specific scenario where an IPS rule is applied to the communication network 202 after adapting the IPS rule as required.

The IPS rule column 302 lists original IPS rules. These IPS rules are predefined and include the format "alert" followed by specific instructions. For example, the IPS rule may target external network traffic "$EXTERNAL_NET any" directed towards a specific host attribute, such as an SQL server, on a specified port (e.g., port 1433 for SQL server). The IPS rule further describes nature of the potential attack "SQL Server potential unauthorized access" and includes metadata such as the service being protected, content matching criteria, a reference code, classification type "attempted-user", and a Snort Identifier (SID).

The destination host attribute column 304 identifies the intended target of the IPS rule within the communication network 202, such as a SQL server, an SMTP server, or a Telnet server. As is apparent, the destination host attribute column 304 includes details of the destination host attribute as defined in the corresponding IPS rule given in the IPS rule column 302.

The host attribute column 306 lists the host attributes that are identified by the port scan module 208 during a port scan in the communication network 202. These host attributes correspond to the type of servers or services running on the detected hosts. For instance, during the port scan, it may be identified that SQL servers, SMTP servers, DNS servers, and HTTP servers are present in the communication network 202, each associated with various open ports.

The open port column 308 shows the open ports associated with the identified hosts from the ports scan. These open ports are vulnerable points through which data can flow to or from the host. For example, after port scan performed in the communication network 202, following hosts are discovered: the SQL server that may be hosted on the port 1433 (SQL), the SMTP server that may be hosted on the port 25 open (SMTP), the DNS server that may be hosted on the port 53, and the HTTP server that may be hosted on the port 80. To summarize, the only applications hosted in the communication network 202 include a SQL Server, an SMTP server, a DNS server, and an HTTP server. It will be apparent that for ease of explanation only four such services (or applications) are considered to be hosted in the communication network 202.

Further, the IP address column 310 indicates the specific IP addresses assigned to each open port. These IP addresses allow the network device 200 to pinpoint the exact location of each open port within the communication network 202. For instance, the open port 1433 hosting the SQL server has the IP address "192.168.1.2", while the open port 25 hosting the SMTP server has the IP address "192.168.1.3".

The adapted IPS rule column 312 includes the adapted version of the IPS rule. As discussed before, the rule adapting module 214 may adapt an IPS rule-based match between the destination host attributes in the IPS rule and the host attributes associated with open ports detected during the port scan. When a match is found, the IPS rule is adapted to replace the destination host attribute associated with the IPS rule with the IP address of the open port.

For example, if an IPS rule configured for a SQL server, the adapted rule would now replace the destination "$SQL_Server" in the IPS rule with the IP address of the open port that is hosting the SQL Server in the communication network 202. Thus, $SQL_Server is replaced with "192.168.1.2." This adaptation ensures that the IPS rule is accurately and precisely targeted to the relevant hosts only, thereby increasing the precision of intrusion prevention. As depicted in the first cell of the adapted IPS rule column 312, the IPS rule is adapted from the original "alert udp $EXTERNAL_NET any -> $SQL_Server" to "alert udp $EXTERNAL_NET any-> 192.168.1.2," after identifying that in the communication network 202, there is one SQL server that is hosted on the port 1433 having the IP address as: 192.168.1.2. This adapted IPS rule is now applied only on the SQL server in the communication network 202 and prevents any unauthorized access to the port 1433.

Similarly, in the second cell of the adapted IPS rule column 312, the IPS rule configured for an SMTP server, as given in the IPS rule column 302, is adapted to apply only on SMTP servers within the communication network 202. Initially, the IPS rule specified "$EXTERNAL_NET any -> $SMTP_Server 25" in order to prevent mail relay attacks. After scanning the communication network 202, it is determined that there is only one SMTP server hosted on the port 25 having the IP address as :192.168.1.3. Thus, the IPS rule is adapted to "alert udp $ EXTERNAL_NET any -> 192.168.1.3 25." As a result, the IPS rule is applied only to the SMTP server in the communication network 202. Further, as depicted in the third cell of the adapted IPS rule column 312, the IPS rule configured for Telnet servers, as given in the IPS rule column 302, may be completely removed, as there are no Telnet servers hosted in the communication network 202. In other words, it is determined that this IPS rule is not relevant for the communication network. As a result, unnecessary application of this IPS rule in the communication network 202 is completely avoided.

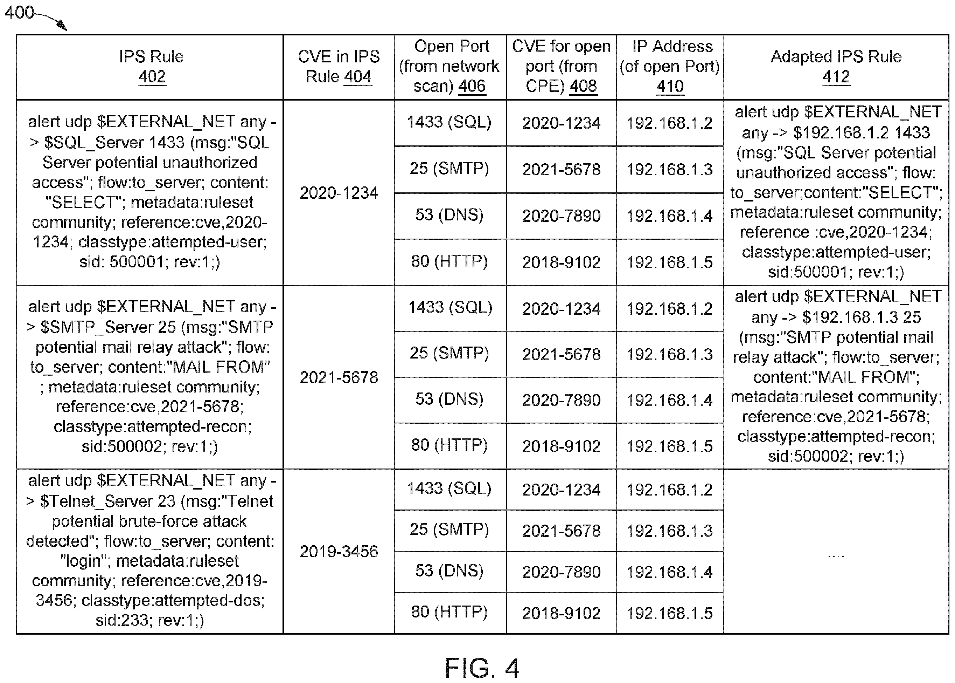

**FIG. 4** depicts a table 400 illustrating a process of mapping CVEs associated with an IPS rule with a set of CVEs determined for each open port within the communication network 202, in accordance with an exemplary embodiment of the present disclosure. **FIG. 4** is explained in conjunction with **FIG. 2****.** The table 400 represents how the network device 200 matches CVEs referenced in IPS rules with CVEs discovered on open ports during port scans to adapt IPS rules based on specific vulnerabilities present within the communication network 202.

The table 400 may include six columns, each representing different stages in the process of mapping CVEs and adapting the IPS rules accordingly. The columns are labelled as an IPS rule column 402, a CVE in IPS rule column 404, an open port column 406, a CVE for open port column 408, an IP address column 410, and an adapted IPS rule column 412. Each row in the table 400 corresponds to a specific scenario in which an IPS rule is applied to the communication network 202 after comparing CVEs from the IPS rule with those identified for services or applications hosted on open ports discovered during a port scan.

The IPS rule column 402 lists the IPS rules. Each IPS rule is associated with a specific alert format that targets external network traffic, i.e., "$EXTERNAL_NET any," aimed at certain applications or services in the communication network 202, such as a SQL server, an SMTP server, or a Telnet server hosted on specific ports (e.g., the port 1433 for SQL server). The IPS rules describe the potential attacks they are designed to detect, such as unauthorized access, mail relay attacks, or brute-force login attempts. These IPS rules may include metadata fields that include, but are not limited to, the CVE references associated with each rule, the nature of attack, classification (e.g., "attempted-user" or "attempted-recon"), and a unique Snort Identifier (SID) for each rule.

The CVE in IPS rule column 404 lists the specific CVEs that are referenced in each of the set of IPS rules. These CVEs represent known vulnerabilities that the IPS rule is designed to detect and protect against. For example, an IPS rule configured to avoid unauthorized access to a SQL server may reference the CVE "2020-1234", while an IPS rule configured to prevent mail relay attack for an SMTP server may reference the CVE "2021-5678." Further, an IPS rule configured to brute-force attack on a Telnet server may reference the CVE "2019-3456."

The open port column 406 lists the open ports identified during a port scan executed by the port scan module 208. These open ports host services or applications (for example, SQL server, SMTP server, or Telnet server) running in the communication network 202, and each service or application represents a potential vulnerability. For instance, the SQL server may be hosted on the port 1433, the SMTP server may be hosted on the port 25, the DNS may be hosted on the port 53, and the HTTP server may be hosted on the port 80.

The CVE for open port column 408 displays CVEs associated with each open port, which is based on the CPE of the services running on those ports. These CVEs are extracted from the port scan database 210 and are mapped to the corresponding open ports. For example, port 1433 hosting the SQL server may have the CVE "2020-1234," while the port 25 hosting the SMTP server may be associated with the CVE "2021-5678." This mapping allows the network device 200 to correlate specific vulnerabilities that may be associated with the open ports detected in the communication network 202.

The IP address column 410 indicates the specific IP address of each open port identified during the port scan. This allows the network device 200 to pinpoint the exact location of each open port within the communication network 202. For example, the port 1433 hosting the SQL server may have the IP address as 192.168.1.2, while the port 25 hosting the SMTP server may have the IP address as 192.168.1.3. Each IP address identifies the open port that has hosted a specific service.

The adapted IPS rule column 412 presents the final version of the IPS rule after the rule adapting module 214 has mapped the CVEs from the IPS rule to the CVEs associated with the open ports. When a match is found between the CVE in the IPS rule and the CVE identified for an open port, the IPS rule is adapted to include the IP address of the open port. For example, if the original IPS rule references CVE "2020-1234" and a match is found for this CVE in the list of CVEs associated with the open ports detected in the communication network 202. The matching CVE may be associated with the open port 1433 having IP address as: "192.168.1.2." Thus, the IPS rule may be adapted to replace "$SQL_Server" with the IP address "192.168.1.2" and the adapted IPS rule will thus specify the IP address of the open port (e.g., "$EXTERNAL_NET any -> 192.168.1.2"). This adaptation ensures that the IPS rule is applied to the specific port only. It will be apparent that multiple such CVE mapping may be detected. Thus, in such case, in order to adapt the IPS rule, "$SQL_Server" may be replaced with multiple IP addresses.

As depicted in the first cell of the adapted IPS rule column 412, the IPS rule configured for an SQL server, as given in the IPS rule column 402, with a potential unauthorized access threat (CVE "2020-1234") is adapted from the original "alert udp $EXTERNAL_NET any -> $SQL_Server 1433" to "alert udp $EXTERNAL_NET any - > 192.168.1.2 1433" after identifying that in the communication network 202, there is one SQL server associated with the same CVE as in the IPS rule, hosted on the port 1433 having IP address as: 192.168.1.2. This adapted IPS rule is now applied only on the SQL server in the communication network 202 and prevents unauthorized access to the port 1433.

Similarly, in the second cell of the adapted IPS rule column 412, the IPS rule configured for an SMTP server, as given in the IPS rule column 402, with a potential mail relay attack (CVE "2021-5678") is adapted from the original "alert udp $EXTERNAL_NET any -> $SMTP_Server 25" to "alert udp $EXTERNAL_NET any -> 192.168.1.3 25" after identifying that in the communication network 202, there is one SMTP server associated with the same CVE as in the IPS rule, hosted on the port 25 having the IP address as: 192.168.1.3. This adapted IPS rule is now applied only on the SMTP server in the communication network 202 and prevents unauthorized access to the port 25.

Further, as depicted in the third cell of the adapted IPS rule column 412, the IPS rule configured for Telnet servers, as given in the IPS rule column 402, may be completely removed, as there is no Telnet servers hosted in the communication network 202. In other words, it is determined that this IPS rule is not relevant for the communication network 202. As a result, unnecessary application of this IPS rule in the communication network 202 is completely avoided.

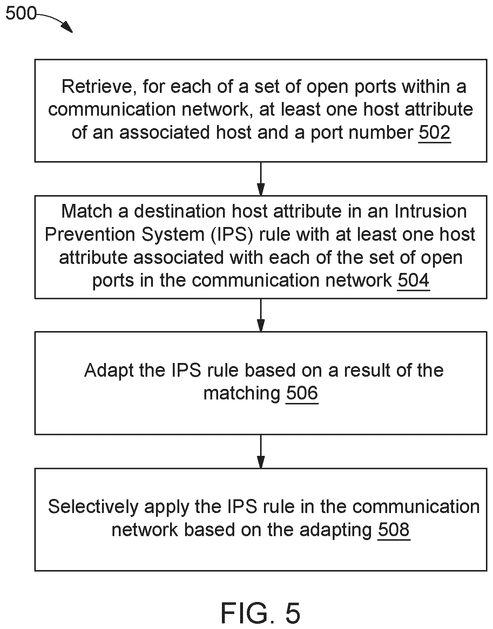

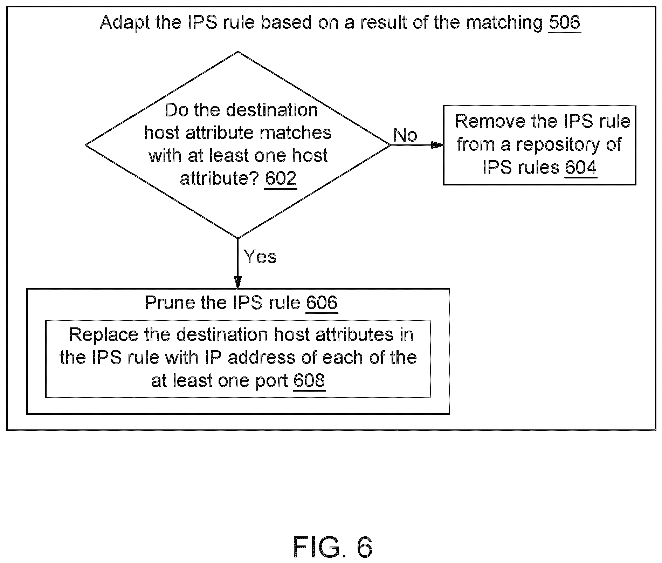

FIG. 5 illustrates a flowchart of an exemplary method for preventing intrusion in a communication network, in an embodiment of the disclosure. FIG. 5 is explained in conjunction with **FIG. 2****,** and **FIG. 3****.** At step 502, the network device 200 may retrieve, for each of a set of open ports within the communication network 202, at least one host attribute of an associated host and a port number. At step 504, the network device 200 may match a destination host attribute in an Intrusion Prevention System (IPS) rule with at least one host attribute associated with each of the set of open ports in the communication network. At step 506, the network device 200 may adapt the IPS rule based on a result of the matching. This is further explained in detail in conjunction with **FIG. 6****.** At step 508, the network device 200 may selectively apply the IPS rule in the communication network 202 based on the adapting.

**FIG. 6** illustrates a flowchart of an exemplary method for adapting the IPS rule based on a result of the matching, in an embodiment of the disclosure. **FIG. 6** is explained in conjunction with **FIG. 2****,** **FIG. 3****,** and **FIG.** 5. At step 602, the network device 200 may perform a check to determine if the destination host attribute matches with at least one host attribute.

If the destination host attributes in the IPS rule do not match with at least one host attribute associated with each of the set of open ports in the communication network 202, the network device 200, at step 604, may adapt the IPS rule by removing the IPS rule from the repository of IPS rules. However, if the destination host attributed in the IPS rule match with at least one host attribute associated with at least one open port from the set of open ports in the communication network 202, the network device 200, at step 606, may adapt the IPS rule by pruning the IPS rule. The pruning of the IPS rule may be to replace, at step 608, the destination host attributes in the IPS rule with Internet Protocol (IP) address of each of the at least one port.

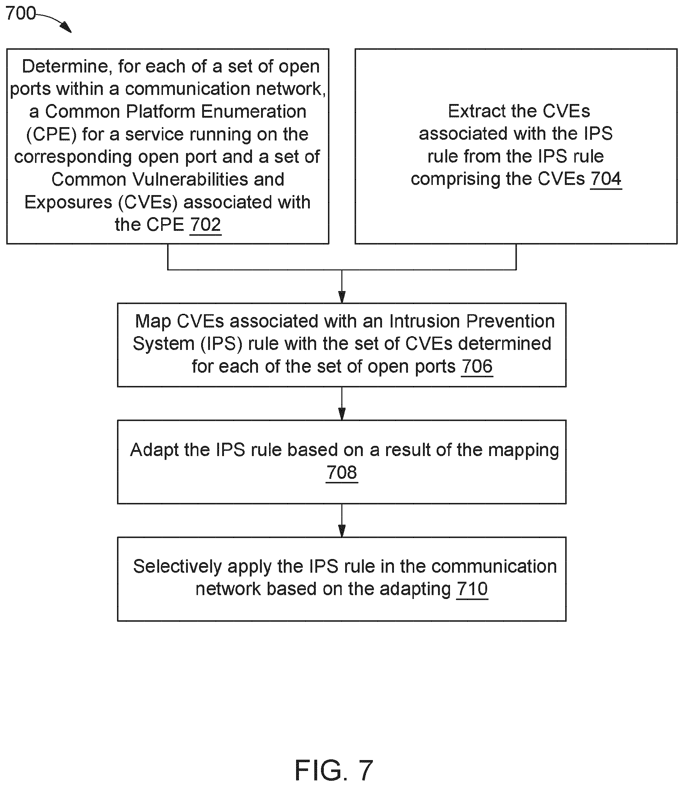

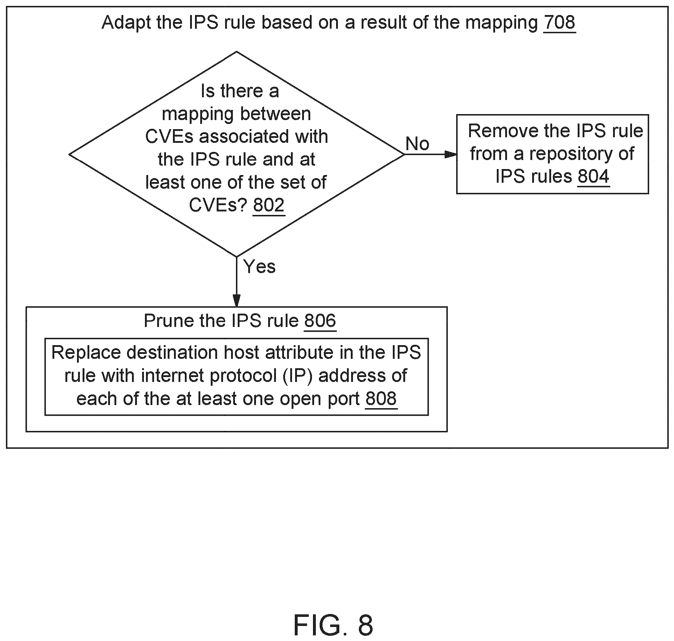

**FIG.** 7 illustrates a flowchart of another exemplary method for preventing intrusion in a communication network, in an embodiment of the disclosure. **FIG.** 7 is explained in conjunction with **FIG. 2****,** and **FIG. 4****.** At step 702, the network device 200 may determine, for each of a set of open ports with the communication network 202, a CPE for a service running on the corresponding open port and a set of CVEs associated with the CPE. Simultaneous to step 702, the network device 200, at step 704, may extract the CVEs associated with the IPS rule from the IPS rule comprising the CVEs. Thereafter, the network device 200, at step 706, may map CVEs associated with the IPS rule with the set of CVEs determined for each of the set of open ports. Thereafter, the network device 200, at step 708, may adapt the IPS rule based on a result of the mapping. This is further explained in detail in conjunction with **FIG. 8****.** Thereafter, the network device 200, at step 710, may selectively apply the IPS rule in the communication network 202 based on the adapting.

**FIG.** 8 illustrates a flowchart of another exemplary method for adapting the IPS rule based on a result of the mapping, in an embodiment of the disclosure. **FIG. 8** is explained in conjunction with **FIG. 2****,** **FIG. 4****,** and **FIG. 5****.** At step 802, the network device 200 may perform a check to determine if there is a mapping between the CVEs associated with the IPS rule and at least one of the set of CVEs.

If the CVEs associated with the IPS rule do not map with at least one of the set of CVEs determined for each of the set of open ports, the network device 200, at step 804, may adapt the IPS rule by removing the IPS rule from the repository of IPS rules. However, if the CVEs associated with the IPS rule is mapped with at least one of the set of CVEs determined for each of the set of open ports, the network device 200, at step 806, may adapt the IPS rule by pruning the IPS rule. The pruning of the IPS rule may be to replace, at step 808, the destination host attributes in the IPS rule with Internet Protocol (IP) address of each of the at least one port.

As will be appreciated by those skilled in the art, the techniques described in the various embodiments discussed above are not routine, or conventional, or well understood in the art.

Conventional Intrusion Prevention Systems (IPS) do not allow for specific pruning of IPS rules tailored to the unique characteristics of a communication network. These systems apply a vast spectrum of IPS rules which covers various services and vulnerabilities, which often results in rule bloat and excessive memory consumption. This degrades network performance by increasing latency. Although some IPS systems provide categorized rule sets for different security levels, they may still require manual intervention to remove irrelevant IPS rules which is a time-consuming and error-prone process, and also dependent on expertise of an administrator. Additionally, conventional systems do not adapt the IPS rules based on actual network attributes which leads to the application of irrelevant IPS rules and an inability to address newly detected services or vulnerabilities.

The techniques discussed in the present disclosure for preventing intrusion in communication networks address these challenges by retrieving at least one host attribute and port number for each open port within the network. Destination host attribute of an Intrusion Prevention System (IPS) rule is then matched with the host attributes of the open ports. Based on the result, the IPS rule is either pruned or removed. If there is a match, the rule is pruned by replacing destination host attributes with the IP address of the open ports, and the rule is then selectively applied.

The disclosed techniques further involve determining a Common Platform Enumeration (CPE) for each service running on open ports and associating Common Vulnerabilities and Exposures (CVEs) with the CPEs, allowing the IPS rule to be adapted by mapping CVEs associated with the IPS rule to those of the open ports. If no CVE mapping is found, the IPS rule is removed. Alternatively, the IPS rule is pruned replacing destination host attributes with the IP address of the open ports, and the rule is then selectively applied.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

**It** will be appreciated that, for clarity purposes, the above description has described embodiments of the disclosure with reference to different functional units and processors. However, it will be apparent that any suitable distribution of functionality between different functional units, processors or domains may be used without detracting from the disclosure. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present disclosure has been described in connection with some embodiments, it is not intended to be limited to the specific form set forth herein. Rather, the scope of the present disclosure is limited only by the claims. Additionally, although a feature may appear to be described in connection with particular embodiments, one skilled in the art would recognize that various features of the described embodiments may be combined in accordance with the disclosure.

Furthermore, although individually listed, a plurality of means, elements or process steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather the feature may be equally applicable to other claim categories, as appropriate.

## Claims

1. A method (500) for preventing intrusion in communication networks, the method (500) comprising:
retrieving (502), for each of a set of open ports within a communication network (202), at least one host attribute of an associated host and a port number;
matching (504) a destination host attribute in an Intrusion Prevention System (IPS) rule with at least one host attribute associated with each of the set of open ports in the communication network (202);
adapting (506) the IPS rule based on a result of the matching; and
selectively applying (508) the IPS rule in the communication network (202) based on the adapting.

2. The method (500) as claimed in claim 1, wherein adapting (506) the IPS rule comprises removing (604) the IPS rule from a repository of IPS rules in absence of a match for the destination host attributes in the IPS rule with at least one host attribute associated with each of the set of open ports in the communication network (202).

3. The method (500) as claimed in claim 1, wherein adapting (506) the IPS rule comprises pruning (606) the IPS rule based on a match for the destination host attributes with at least one host attribute associated with at least one open port from the set of open ports in the communication network (202).

4. The method (500) as claimed in claim 3, wherein pruning (606) the IPS rule comprises replacing (608) the destination host attributes with Internet Protocol (IP) address of each of the at least one open port in the IPS rule.

5. The method (500) as claimed in claim 1, wherein retrieving comprises determining, for each of the set of open ports, a Common Platform Enumeration (CPE) for a service running on the corresponding open port and a set of Common Vulnerabilities and Exposures (CVEs) associated with the CPE.

6. The method (500) as claimed in claim 5, wherein matching further comprising mapping CVEs associated with the IPS rule with the set of CVEs determined for each of the set of open ports, when the destination host attributes in the IPS rule match with at least one host attribute associated with at least one open port from the set of open ports.

7. The method (500) as claimed in claim 6, wherein adapting the IPS rule comprises removing the IPS rule in absence of a mapping between the CVEs associated with the IPS rule and each of the set of CVEs determined for each of the set of open ports.

8. The method (500) as claimed in claim 6, wherein adapting the IPS rule comprises pruning the IPS rule based on a mapping between the CVEs associated with the IPS rule and at least one of the set of CVEs determined for at least one open port from the set of open ports, and
optionally, wherein pruning the IPS rule comprises replacing the destination host attributes in the IPS rule with IP address of each of the at least one open port.

9. A method (700) for preventing intrusion in communication networks, the method (700) comprising:
determining (702), for each of a set of open ports within a communication network (202), a Common Platform Enumeration (CPE) for a service running on the corresponding open port and a set of Common Vulnerabilities and Exposures (CVEs) associated with the CPE;
mapping (706) CVEs associated with an Intrusion Prevention System (IPS) rule with the set of CVEs determined for each of the set of open ports;
adapting (708) the IPS rule based on a result of the mapping; and
selectively applying (710) the IPS rule in the communication network (202) based on the adapting.

10. The method (700) as claimed in claim 9, further comprising extracting (704) the CVEs associated with the IPS rule from the IPS rule comprising the CVEs.

11. The method (700) as claimed in claim 9, further comprising extracting the CVEs associated with the IPS rule based on a Snort Identifier (SID) in the IPS rule.

12. The method (700) as claimed in claim 9, wherein adapting (708) the IPS rule comprises removing (804) the IPS rule in absence of a mapping between the CVEs associated with the IPS rule and each of the set of CVEs determined for each of the set of open ports.

13. The method (700) as claimed in claim 9, wherein adapting (708) the IPS rule comprises pruning (802) the IPS rule based on a mapping between the CVEs associated with the **IPS** rule and at least one of the set of CVEs determined for at least one open port from the set of open ports, and
optionally, wherein pruning (806) the **IPS** rule comprises replacing (808) destination host attributes in the **IPS** rule with Internet Protocol (IP) address of each of the at least one open port.

14. A network device (200) comprising:
a processor (204); and
a memory (206) communicably coupled to the processor (204) and comprising processor instructions that when executed by the processor (204), cause the processor (204) to:
retrieve, for each of a set of open ports within a communication network (202), at least one host attribute of an associated host and a port number;
match a destination host attribute in an Intrusion Prevention System (IPS) rule with at least one host attribute associated with each of the set of open ports in the communication network (202);
adapt the IPS rule based on a result of the matching; and
selectively apply the IPS rule in the communication network (202) based on the adapting.

15. A network device (200) comprising:
a processor (204); and
a memory (206) communicably coupled to the processor (204) and comprising processor instructions that when executed by the processor (204), cause the processor (204) to:
determine, for each of a set of open ports within a communication network (202), a Common Platform Enumeration (CPE) for a service running on the corresponding open port and a set of Common Vulnerabilities and Exposures (CVEs) associated with the CPE;
map CVEs associated with an Intrusion Prevention System (IPS) rule with the set of CVEs determined for each of the set of open ports;
adapt the IPS rule based on a result of the mapping; and
selectively apply the IPS rule in the communication network (202) based on the adapting.
